# EUROPEAN PATENT APPLICATION

(11) **EP 2 938 051 A1**
(43) Date of publication of application: **28.10.2015**
(21) Application number: 14166078.7
(22) Date of filing: 25.04.2014
(51) Int. Cl.: H04M 1/253, H04M 1/725

(54) **Dedicated hand-held electronic device for SKYPE(TM) communication**

(71) Applicant: Linktel Inc., Taipei 106 (TW)
(72) Inventor: Lee, Hong-Lin, 106 Taipei (TW); Tsai, Wen-Hsiung, 106 Taipei (TW); Yang, Tzi-i, 106 Taipei (TW)
(74) Representative: Altenburg, Bernardus Stephanus Franciscus

(57) **Abstract**

A dedicated hand-held electronic device (1) having a main body (10), a touch screen (20), a network communication device (30), and a control unit (50). The touch screen (20) is combined the main body (10). The network communication device (30) is set in the main body (10) for connecting a network. The control unit (50) is set in the main body (10), the control unit (50) is electrically connected with the touch screen (20) and the network. The control unit (50) includes an executing module (51) and a prohibition change module (52). The executing module (51) is used to control the touch screen (20) displaying a SKYPE™ communication interface only, after turn on the handheld electronic device (1), execute the communication function of SKYPE™ only therefor, wherein the SKYPE™ communication interface includes a plurality SKYPE™ operating picture. The prohibition change module (52) is used to banning a user to install a not as-built program in the hand-held electronic device (1).

## Description

### Field of the Invention

The present invention relate to a hand-held electronic device. More specially, the exemplary embodiments of the present invention relate to a dedicated hand-held electronic device for SKYPE™ communication.

### Background

With improving in the technology of communication continuously, the present long-distance communication is operated through the traditional telephone system and through the network in addition. Furthermore, with the bigger network bandwidth, the network communication is operated with voice, and further with video, it improves convenience of communication. Many software of network communication are become the indispensable communication tool in social and commerce, and SKYPE™ is one of there.

The present communication softs of SKYPE™ are downloaded to telephone or computer by user personally, and then be executed. However, when the user want to execute SKYPE™ to communicate, he should start the communication soft of SKYPE™ first, and then call or take other action. It's inconvenient to the user who use SKYPE™ to communicate usually.

### Summary

A main object of the present invention is to provide a dedicated Hand-held electronic device for SKYPE™ communication.

In order to achieve the aforementioned objects, the present invention provides a dedicated hand-held electronic device having a main body, a touch screen, a network communication device, and a control unit. The touch screen is combined the main body. The network communication device is set in the main body for connecting a network. The control unit is set in the main body, the control unit is electrically connected with the touch screen and the network. The control unit includes an executing module and a prohibition change module. The executing module is used to control the touch screen to display a SKYPE™ communication interface only, after turn on the hand-held electronic device, execute the communication function of SKYPE™ only therefor, wherein the SKYPE™ communication interface includes a plurality SKYPE™ operating picture. The prohibition change module is used to ban a user to install a not as-built program in the hand-held electronic device.

According to one embodiment of the present invention, the hand-held electronic device further has a home button. The control unit further comprises a contact list display module, and the contact list display module is used to display a contact list operating picture of the plurality SKYPE™ operating picture on the touch screen, after the user touches the home button. wherein the contact list operating picture comprises a plurality contact icon such that the user can call phone by touching.

According to one embodiment of the present invention, the hand-held electronic device further has an image capturing device, the image capturing device is electrically connected with the control unit, the image capturing device is used to capture an image information.

According to one embodiment of the present invention, the plurality SKYPE™ operating pictures include an unlock operating picture.

According to one embodiment of the present invention, the control unit is able to be installed an operating system and executed it, and the operating system is Android™ or Windows™ operating system.

### Brief description of the drawings

The exemplary embodiment(s) of the present invention will be understood more fully from the detailed description given below and from the accompanying drawings of various embodiments of the invention, which, however, should not be taken to limit the invention to the specific embodiments, but are for explanation and understanding only.
FIG. 1 is a device construction diagram illustrating the hand-held electronic device in accordance with the present invention.
FIG. 2 is a drawing expressing one unlock operating picture of the plurality SKYPE™ operating picture.
FIG. 3 is a drawing expressing one contact list operating picture of the plurality SKYPE™ operating picture.
FIG 4 is a drawing expressing that the user touches the home button.

### Detailed Description

For facilitating understanding and clarifying the object, characteristics, and advantages of the present invention, the following specific embodiments and figures of the present invention are presented as a detailed description.

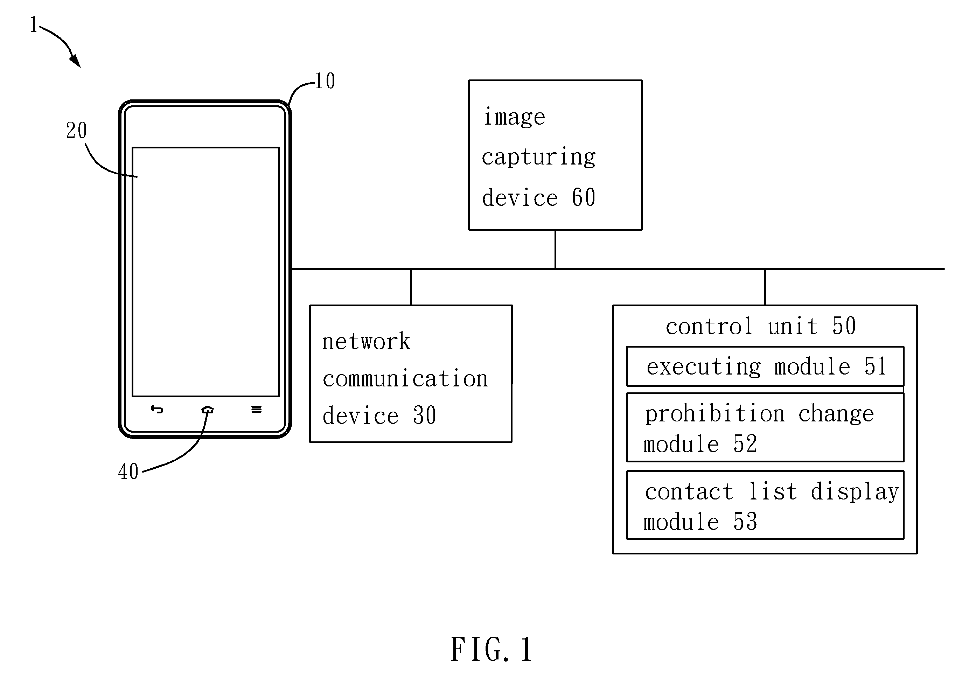

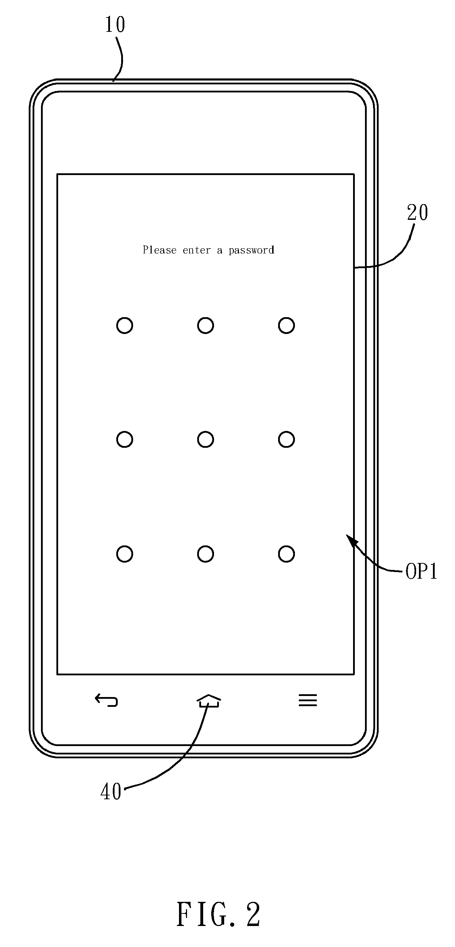

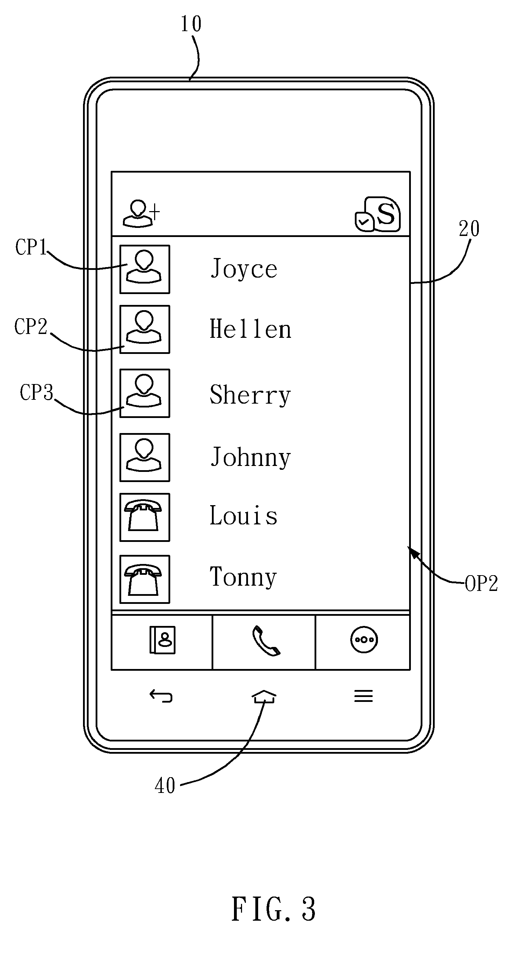

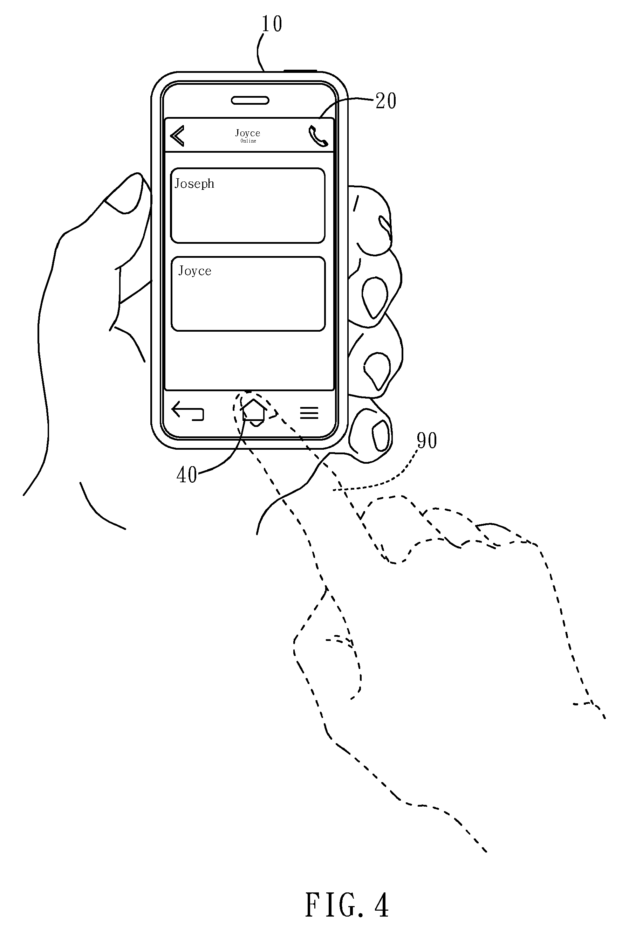

Please refer to figure 1 to figure 4. Figure 1 is a device construction diagram illustrating the hand-held electronic device in accordance with the present invention. Figure 2 expresses one unlock operating picture of the plurality SKYPE™ operating picture. Figure 3 expresses one contact list operating picture of the plurality SKYPE™ operating picture. Figure 4 is a drawing expressing that the user touches the home button.

Please refer to FIG.1. In one embodiment of the present invention, a dedicated hand-held electronic device for SKYPE™ communication 1 includes a main body 10, a touch screen 20, a network communication device 30, a home button 40, a control unit 50, and an image capturing device 60.

The touch screen 20 is connected with the main body 10. The touch screen 20 is used to display a SKYPE™ communication interface, and receives an instruction input by the user with touching.

The network communication device 30 is disposed within the main body 10, the network communication device 30 is used to connect with network to enable the hand-held electronic device 1 to network communicate to.

In one embodiment of the present invention, the home button 40 is not limit of the physical button, such as virtual button which is displayed on the touch screen 20 to be touched by the user.

In one embodiment of the present invention, the control unit 50, such as a processing unit, is disposed within the main body 10, and the control unit 50 is electrically connected with the touch screen 20 and the network communication device. The control unit 50 is able to be installed and executed Android™ or Windows™ system to execute the relating controlling on present phone. The control unit 20 includes an executing module 51, a prohibition change module 52, and a contact display module 53. In one embodiment of the present invention, any module above can be equipped hardware device, software program, firmware or combinations thereof, in addition, through electrical circuit or other suitable type. Wherein, when any of modules is carry out through the software, the control unit 50 install and execute there. Any module is disposed alone and in combination in addition. Furthermore, the preferred embodiments are only illustrative embodiments of the present invention, to avoid redundancy, not described in detail all possible combinations change. However, person having ordinary skill in the art shall understand that any module said above is not essential. For practicing the present invention, it may be includes other known module and element in detail, any module may be omitted or modified, and it's not necessarily that no other module or element is set between any two module.

In one embodiment of the present invention, the executing module 51 is used to control the touch screen 20 to display a SKYPE™ communication interface only, thereby, the executing module 51 can execute the SKYPE™ communication function after the hand-held electronic device 1 starts. Wherein the SKYPE™ interface includes a plurality SKYPE™ operating picture, and the plurality SKYPE™ operating picture the unlock picture OP1 shown in FIG.2, the contact list operating picture OP2 shown in FIG 3, and other present SKYPE™ operating picture (not shown in the figure). In other words, after the user starts the hand-held electronic device 1, the SKYPE™ communication interface can be operated directly without further touch the SKYPE™ application on the desktop pattern to open SKYPE™ application. As shown in FIG. 2, in one embodiment of the present invention, the unlock operating picture OP1 is the pattern lock. But the unlock operating picture OP1 is not limited to the pattern lock, and can be the oldness and common cipher lock too. Since using pattern lock is currently existing technology, no further details of the principle and operation mode are provided here.

The prohibition change module 52 is used to ban the user to install a not as-built program in the hand-held electronic device 1. In other word, when the user uses the hand-held electronic device 1 of the present invention, the user uses as-built programs installed on leaving the factory only. Therefore, the present invention provides the hand-held electronic device 1 executing SKYPE™ communication only and banning to install other programs for other use (ex: installing a browser to surf a web.).

Please refer to FIG.2, FIG.3, and FIG.4. In one embodiment of the present invention, the contact displaying module 53 is used to display a contact list operating picture OP2 after the user touches the home button 40. In the other word, no matter what operating picture the user executes, the user can return the contact list operating picture OP2 by touching the home button 40 briefly. Wherein the contact list operating picture OP2 includes a plurality contact buttons CP1∼CP3 to call phone by touching.

The image capturing device 60, such as a camera, is electrically connected to control unit 50. The image capturing device 60 is used to capture picture information, such as face picture of the user, to execute video communication on the hand-held electronic device 1.

Through the above description, the present invention provides a dedicated hand-held electronic device for SKYPE™ communications, in addition to allowing the user to access to the SKYPE™ communication interfaces directly for these operations, but also can display the contact list operating picture OP2 directly and fast by touching single button. Thereby, the user, who uses SKYPE™ communication regularly, can utilize the SKYPE™ program to call phone or execute other communication, can communicate more quickly and use SKYPE™ application to make calls or other communications.

In summary, regardless of the function, way and result, the present invention is shown to have technical characteristics different from those of the prior art. However, the aforementioned embodiments are just for illustrating the principle and the result of the present invention and not for limiting the range of the present invention. It will be obvious to those skilled in the art that, based upon the descriptions herein, changes and modifications may be made without departing from this invention and its broader aspects. Therefore, the appended claims are intended to encompass within their scope all such changes and modifications as are within the true spirit and scope of the exemplary embodiments of the present invention.

## Claims

1. A dedicated hand-held electronic device (1) for SKYPE™ communication, comprising:
a main body (10);
a touch screen (20) combined the main body (10);
a network communication device (30) set in the main body (10) for connecting a network;
a control unit (50) set in the main body (10), the control unit (50) electrically connected with the touch screen (20) and the network, the control unit (50) comprising:
an executing module (51) for controlling the touch screen (20) to display a SKYPE™ communication interface only such that the hand-held electronic device (1) only executes the communication function of SKYPE™ after turn on, wherein the SKYPE™ communication interface includes a plurality SKYPE™ operating picture; and
a prohibition change module (52) for banning a user to install an not as-built program in the hand-held electronic device (1).

2. The hand-held electronic device (1) according to claim 1, further comprising a home button (40), the control unit (50) further comprises a contact list display module (53), the contact list display module (53) is used to display a contact list operating picture (OP2) of the plurality SKYPE™ operating picture on the touch screen (20), after the user touches the home button (40), wherein the contact list operating picture (OP2) comprises a plurality contact icon (CP1∼CP3) such that the user can call phone by touching.

3. The hand-held electronic device (1) according to claim 2, wherein the control unit (50) is able to be installed and executed an operating system, and the operating system is Android™ or Windows™ operating system.

4. The hand-held electronic device (1) according to claim 1, further comprising an image capturing device (60), the image capturing device (60) is electrically connected with the control unit (50), the image capturing device (60) is used to capture an image information.

5. The hand-held electronic device (1) according to claim 4, wherein the control unit (50) is able to be installed and executed an operating system, and the operating system is Android™ or Windows™ operating system.

6. The hand-held electronic device (1) according to claim 1, wherein the plurality SKYPE™ operating pictures include an unlock operating picture (OP1).

7. The hand-held electronic device (1) according to claim 6, wherein the control unit (50) is able to be installed and executed an operating system, and the operating system is Android™ or Windows™ operating system.

8. The hand-held electronic device (1) according to claim 1, wherein the control unit (50) is able to be installed and executed an operating system, and the operating system is Android™ or Windows™ operating system.
